# EUROPEAN PATENT APPLICATION

(11) **EP 4 557 482 A1**
(43) Date of publication of application: **21.05.2025**
(21) Application number: 23903665.0
(22) Date of filing: 11.08.2023
(51) Int. Cl.: H01M 50/258, H01M 50/207, H01M 50/249

(54) **BATTERY PACK AND VEHICLE COMPRISING SAME**

(30) Priority: 16.12.2022 KR 20220177489; 08.06.2023 KR 20230073839
(71) Applicant: LG Energy Solution, Ltd., Seoul 07335 (KR)
(72) Inventor: KIM, Ji-Hun, Daejeon 34122 (KR); KIM, Sang-Jin, Daejeon 34122 (KR); BAEK, Seung-Ryul, Daejeon 34122 (KR); SEOL, Jae-Jung, Daejeon 34122 (KR); YOON, Seog-Jin, Daejeon 34122 (KR)
(74) Representative: Plasseraud IP
(86) International application number: PCT/KR2023/011984
(87) International publication number: WO 2024/128461

(57) **Abstract**

The battery pack according to the present disclosure includes a plurality of battery module assemblies, each battery module assembly including a cell array including a plurality of battery cells and a cell array case accommodating the cell array and having a protrusion portion extending from at least one surface; and a mounting portion disposed between the plurality of battery module assemblies, and having a protrusion insertion portion into which the protrusion portion is inserted.

## Description

### TECHNICAL FIELD

The present disclosure relates to a battery pack and a vehicle comprising the same.

The present application claims priority to Korean Patent Application No. 10-2022-0177489 filed on December 16, 2022 in the Republic of Korea, the disclosure of which is incorporated herein by reference.

Additionally, the present application claims priority to Korean Patent Application No. 10-2023-0073839 filed on June 8, 2023 in the Republic of Korea, the disclosure of which is incorporated herein by reference.

### BACKGROUND ART

Due to being easily applicable to various products and having electrical properties such as high energy density, secondary batteries are commonly applied to not only portable devices but also electric vehicles (EVs) or hybrid electric vehicles (HEVs) powered by electricity. Secondary batteries remarkably reduce the use of fossil fuels, and in addition to the primary advantage, they do not generate by-products from the use of energy. From this perspective, secondary batteries are seen as a new source of energy with eco-friendliness and energy efficiency.

The types of secondary batteries widely used at present include lithium ion batteries, lithium polymer batteries, nickel cadmium batteries, nickel hydrogen batteries, nickel zinc batteries and the like. A unit secondary battery cell or a unit battery cell has an operating voltage of about 2.5V to 4.5V. Accordingly, when higher output voltage is required, a plurality of battery cells may be connected in series to form a battery pack. Additionally, the battery pack may be fabricated by connecting the plurality of battery cells in parallel according to the charge/discharge capacity required for the battery pack. Accordingly, the number of battery cells in the battery pack may be variously set depending on the required output voltage or charge/discharge capacity.

Meanwhile, when fabricating the battery pack by connecting the plurality of battery cells in series/in parallel, it is general to make a battery module including at least one battery cell, and then make a battery pack or a battery rack using at least one battery module with an addition of any other component.

However, since the battery pack includes a plurality of battery modules, each including a plurality of battery cells in a module case, and a pack case accommodating the battery modules, the addition of the module case may degrade the energy density, ease of assembly and cooling performance. Accordingly, recently, attempts are being made for cell to pack (CTP) type battery packs.

The CTP type battery packs are designed to receive a plurality of battery cells in the pack case without the module case. In this case, the stiffness of the pack case is very important. For example, when the battery pack including the plurality of battery cells is subjected to bending, the battery cells connected to each other are separated from each other, causing vents or explosions. To avoid dangers, it is necessary to ensure the bending stiffness of the pack case.

Generally, the battery pack is manufactured by installing a beam such as an aluminum extrusion plate in the pack case and fixing the battery cells to the beam using bolts. However, since bolting is only performed on the top of the beam, the beam and the battery cells are only locally held together, resulting in inadequate bending stiffness. Using a pack reinforcement may be contemplated, but an increase in volume or weight of the battery pack is unfavorable in terms of energy density, and it is not easy to arbitrarily add the pack reinforcement within the preset specification of the battery pack. **In** particular, it is impossible to add the pack reinforcement in the vertical direction while keeping the height of the battery pack minimal. Accordingly, there is a need for an improved battery pack having bending stiffness.

### SUMMARY

### Technical Problem

The present disclosure is directed to providing a battery pack having bending stiffness and a vehicle comprising the same.

However, the technical problem to be solved by the present disclosure is not limited to the above-described problems, and these and other problems will be clearly understood by those skilled in the art from the following description.

### Technical Solution

To solve the above-described problem, the present disclosure provides a battery pack including a plurality of battery module assemblies, each battery module assembly including a cell array including a plurality of battery cells and a cell array case accommodating the cell array and having a protrusion portion extending from at least one surface; and a mounting portion disposed between the plurality of battery module assemblies, and having a protrusion insertion portion into which the protrusion portion is inserted.

The cell array may have a length, a width and a height, the plurality of battery module assemblies may be arranged along a widthwise direction of the cell array, and the mounting portion may extend along a lengthwise direction of the cell array between the plurality of battery module assemblies.

The protrusion portion may protrude from at least one surface of the cell array case toward the widthwise direction.

The protrusion portion may include a stopper portion to prevent movement in the lengthwise direction or the widthwise direction within the protrusion insertion portion.

The protrusion portion may have a T-shaped cross section perpendicular to a heightwise direction of the cell array.

The protrusion insertion portion may be in a shape corresponding to the protrusion portion.

The protrusion portion may include a plurality of protrusion portions spaced apart from each other along the lengthwise direction.

The protrusion portion may include a first protrusion portion present in any one of the plurality of battery module assemblies; and a second protrusion portion present in an adjacent other battery module assembly among the plurality of battery module assemblies, and the first protrusion portion and the second protrusion portion may be arranged in an alternating manner along the lengthwise direction.

The first protrusion portion and the second protrusion portion may be arranged spaced apart from each other.

The first protrusion portion and the second protrusion portion may be arranged so that parts overlap in the widthwise direction.

Each of the first protrusion portion and the second protrusion portion may include a leg portion extending in the widthwise direction and having a constant width; and a head portion connected to the leg portion and extending longer than the width in the lengthwise direction, and the head portion of the first protrusion portion and the head portion of the second protrusion portion may interfere with each other in the lengthwise direction or the widthwise direction in case of bending of the mounting portion.

The head portion may extend from one side of the leg portion.

The head portion may extend from two sides of the leg portion.

The head portion may have a round tip.

The mounting portion may include a first protrusion insertion portion into which the first protrusion portion is inserted on one side; and a second protrusion insertion portion into which the second protrusion portion is inserted on the other side.

The protrusion portion may be inserted into the protrusion insertion portion in a heightwise direction of the cell array.

The protrusion portion and the protrusion insertion portion may extend in a heightwise direction of the cell array to correspond to a height of the cell array case.

The protrusion insertion portion may include a stopper part spaced apart in the heightwise direction of the mounting portion to support a bottom surface of the protrusion portion.

The mounting portion may include a solid or empty wall portion made by die casting, and the protrusion insertion portion may be shaped such that at least a portion of an outer surface of the wall portion is recessed inwards.

Additionally, the present disclosure provides a vehicle including the battery pack according to the present disclosure.

### Advantageous Effects

According to the present disclosure, it may be possible to provide the battery pack ensuring bending stiffness, thereby ensuring safety and reliability of the battery pack.

Additionally, since the battery module assembly is assembled with the mounting portion and they are confined and fixed to each other, it may be possible to ease the assembly and ensure stability.

Additionally, since loads are transferred when the battery pack is subjected to bending, stiffness of the battery module assembly may be used as stiffness of the battery pack.

Additionally, the battery pack may ensure bending stiffness while keeping the height of the battery pack minimal.

The present disclosure may have many other effects, and they will be described in each embodiment, and regarding the effect that may be easily anticipated by those skilled in the art, the corresponding description is omitted.

### BRIEF DESCRIPTION OF THE DRAWINGS

The accompanying drawings illustrate exemplary embodiments of the present disclosure and together with the following detailed description, serve to provide a further understanding of the technical aspect of the present disclosure, and thus the present disclosure should not be construed as being limited to the drawings.
FIG. 1 is a perspective view of a battery pack according to an embodiment of the present disclosure.
FIG. 2 is an exploded perspective view of the battery pack of FIG. 1.
FIG. 3 is a diagram of the main components of the battery pack of FIG. 1 when viewed from top.
FIG. 4 is a cross-sectional perspective view of the main components of the battery pack of FIG. 1.
FIG. 5 is a cross-sectional view of the battery pack of FIG. 1, taken along the line A-A'.
FIGS. 6 and 7 are diagrams illustrating another embodiment of the present disclosure.
FIGS. 8 and 9 are diagrams illustrating another embodiment of the present disclosure.
FIGS. 10 and 11 are diagrams illustrating another embodiment of the present disclosure.
FIG. 12 is a perspective view of a vehicle including the battery pack of FIG. 1.

### DETAILED DESCRIPTION

Hereinafter, exemplary embodiments of the present disclosure will be described in detail with reference to the accompanying drawings. Prior to the description, it should be understood that the terms or words used in the specification and the appended claims should not be construed as being limited to general and dictionary meanings, but rather interpreted based on the meanings and concepts corresponding to the technical aspect of the present disclosure on the basis of the principle that the inventor is allowed to define the terms appropriately for the best explanation.

Therefore, the embodiments described herein and the illustrations shown in the drawings are exemplary embodiments of the present disclosure to describe the technical aspect of the present disclosure and are not intended to be limiting, so it should be understood that a variety of other equivalents and modifications could have been made thereto at the time the application was filed.

In the drawings, each element or a specific portion of the element may be exaggerated, omitted or schematically depicted for convenience of description and clarity. Accordingly, each element may not be shown at true scale size. When it is determined that a certain detailed description of related known functions or elements may make the subject matter of the present disclosure unnecessarily ambiguous or vague, the description is omitted. For reference, the terms indicating directions are based on the elements shown in the accompanying drawings, and they are relative terms that may be subject to change depending on the true position or locations of the elements.

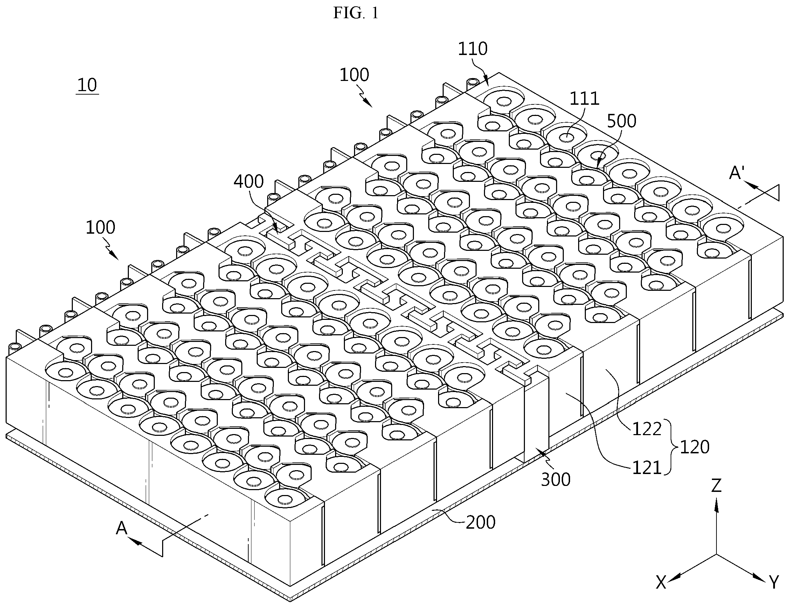

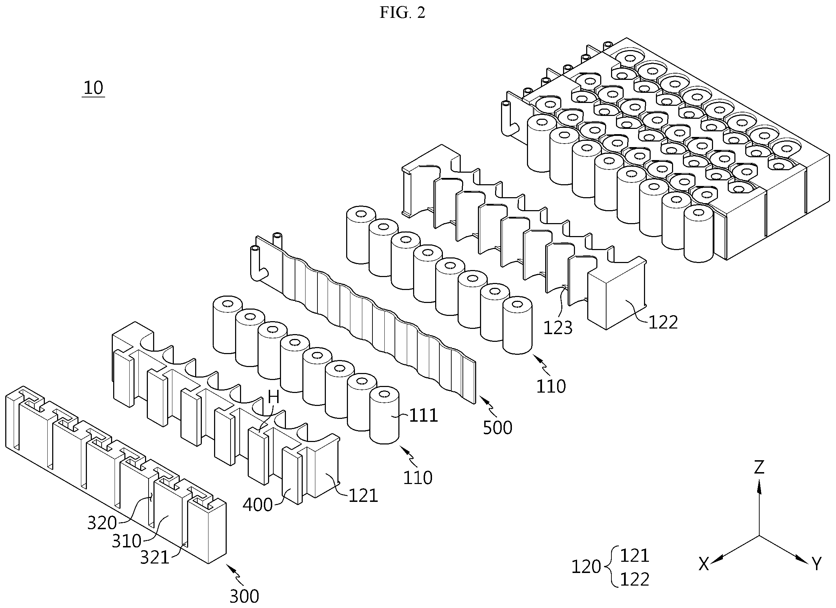

FIG. 1 is a perspective view of a battery pack according to an embodiment of the present disclosure, and FIG. 2 is an exploded perspective view of the battery pack of FIG. 1.

Referring to FIGS. 1 and 2, the battery pack 10 according to an embodiment of the present disclosure may include a plurality of battery module assemblies 100, each including a cell array 110 including a plurality of battery cells 111 and a cell array case 120 accommodating the cell array 110, and a mounting portion 300 disposed between the plurality of battery module assemblies 100.

The battery cell 111 may include any type of secondary battery, for example, a prismatic, cylindrical or pouch-type battery cell, and in this embodiment, a cylindrical battery cell is taken as an example of the battery cell 111. The plurality of battery cells 111 may be electrically connected to each other. The battery module assembly 100 may include a plurality of cell arrays 110 such that the plurality of battery cells 111 is arranged in rows and columns. The battery pack 10 may include the plurality of battery module assemblies 100.

The cell array 110 may have a length, a width and a height. For example, in FIG. 1, the lengthwise direction of the cell array 110 may be defined as a Y direction, the widthwise direction of the cell array 110 may be defined as an X direction, and the heightwise direction of the cell array 110 may be defined as a Z direction. The cell array 110 and the plurality of battery module assemblies 100 including the plurality of cell arrays 110 may be disposed along the widthwise direction of the cell array 110.

Meanwhile, referring to FIG. 2, to put the plurality of cell arrays 110 together into a unit structure, i.e., one battery module assembly 100, the battery module assembly 100 may include the cell array case 120. The cell array case 120 may act as a pack case that is made of plastic resin, supports the battery cells 111, ensures the stiffness of the battery cells 111, and forms the exterior of the side of the battery pack 10, forming the appearance of the battery pack 10.

According to an embodiment of the present disclosure, as shown in FIG. 1, the cell array case 120 may include an end plate 121 disposed in the lengthwise direction on the outer side of the battery module assembly 100, and a main plate 122 disposed between the end plates 121 to connect the end plates 121 and separate the plurality of cell arrays 110. The main plate 122 may include a plurality of main plates 122 along the widthwise direction of the cell array 110 to form a wall in the widthwise direction of the cell array case 120.

In addition to the end plate 121 and the main plate 122, the cell array case 120 may further include a cell housing 123 to support the bottom of the battery cells 111. Accordingly, since the end plate 121 or the main plate 122 supports two side surfaces of the battery cells 111 and the cell housing 123 supports the bottom surface of the battery cells 111, it may be possible to prevent the battery cells 111 from slipping out of the cell array case 120.

Alternatively, the cell array case 120 may be in the shape of a box with four walls. The cell array case 120 may further include a module frame disposed on top or bottom of the plurality of battery cells 111 to fix the battery cells 111. The module frame may include a module top frame to maintain the interval of the battery cells 111 on top of the plurality of battery cells 111 and a module bottom frame on which the plurality of battery cells 111 is seated. The module frame may have holes into which the plurality of battery cells 111 is inserted.

Alternatively, the cell array case 120 may be configured in a way such that an adhesive material such as resin is filled in between the plurality of cell arrays 110 into a unit structure, and a wall is formed on at least one side.

The cell array case 120 shown in the drawings is provided by way of example, and the cell array case 120 may come in various configurations. The cell array case 120 may be identical to the existing module case, and the cell array case 120 may be different from the existing module case, and in this case, the battery pack 10 may be a CTP type battery pack.

Meanwhile, the battery pack 10 may include a pack bottom plate 200 disposed on bottom of the plurality of battery module assemblies 100, and the mounting portion 300 may be mounted on the pack bottom plate 200. The pack bottom plate 200 may constitute a part of the pack case. For example, in this exemplary configuration, the pack bottom plate 200 may form a bottom surface of a rectangular plate shape. Although not shown in the drawings, a vent path may be formed between the pack bottom plate 200 and the battery module assembly 100 to allow high temperature gases or flames that may be produced during venting of the battery cell 111 to flow therein.

Additionally, the battery module assembly 100 may include a cooling member 500 between the cell arrays 110 to cool the battery cells 111 when heat is produced from the battery cells 111. FIGS. 1 and 2 show the two cell arrays 110 between the two main plates 122 and the cooling member 500 between the two cell arrays 110.

Meanwhile, the battery pack 10 of the present disclosure may include the mounting portion 300 between the plurality of battery module assemblies 100 to connect the battery module assemblies 100.

The mounting portion 300 may extend along the lengthwise direction of the cell array 110 between the plurality of battery module assemblies 100. Accordingly, the mounting portion 300 may fix the battery module assemblies 100 extending the lengthwise direction to the inside of the battery pack 10 more firmly. The mounting portion 300 may be disposed between two adjacent battery module assemblies 100 among the plurality of battery module assemblies 100, and configured to enhance stiffness of the pack case and fix the battery module assemblies 100 to the inside of the battery pack 10.

Additionally, to enhance stiffness of the battery pack 10, the cell array case 120 included in the battery pack 10 of the present disclosure may have a protrusion portion 400 extending from at least one surface, and the mounting portion 300 may have a protrusion insertion portion 320 into which the protrusion portion 400 is inserted.

**In** this instance, the mounting portion 300 may include a solid or empty wall portion 310 made by die casting, not by extruding an aluminum plate like the conventional battery pack 10, and the protrusion insertion portion 320 may be shaped such that at least a portion of the outer surface of the wall portion 310 is recessed inwards. The mounting portion 300 may be made of aluminum. The aluminum is light-weight, has high thermal conductivity, and allows die casting.

The protrusion portion 400 may protrude from at least one surface of the cell array case 120 toward the widthwise direction of the cell array 110. The protrusion portion 400 may be made of plastic resin and integrally formed with the cell array case 120 by plastic injection molding. **In** another example, in the same way as the mounting portion 300, the protrusion portion 400 may be made of aluminum. When the mounting portion 300 and the protrusion portion 400 are made of a similar or identical material, the assembly tolerance does not change in the event of thermal or mechanical deformation during use and stress concentration induced by deformation at any one portion may not occur.

The protrusion portion 400 may include a plurality of protrusions 400 spaced apart from each other along the lengthwise direction of the cell array 110. The protrusion portion 400 may be disposed at the end plate 121 facing the mounting portion 300 between the two battery module assemblies 100, and the mounting portion 300 may be disposed between the two facing end plates 121 of the two battery module assemblies 100.

Although FIG. 1 shows the two battery module assemblies 100 and the protrusion portion 400 only present in the end plate 121 between the two battery module assemblies 100, the plurality of battery module assemblies 100 may extend along the widthwise direction or lengthwise direction. **In** this instance, the end plate 121 or the main plate 122 also may have the protrusion portion 400 on two side surfaces. Accordingly, it may be possible to enhance the assembly strength by the protrusion portion 400 and the protrusion insertion portion 320 irrespective of the number of battery module assemblies 100 or the extension direction.

The protrusion portion 400 may include a stopper portion H to prevent movement in the lengthwise direction or the widthwise direction of the cell array 110 within the protrusion insertion portion 320. Accordingly, when the protrusion portion 400 is inserted and fit into the protrusion insertion portion 320, they may be confined and fixed to each other, and thus only by manipulation to insert the protrusion portion 400 into the protrusion insertion portion 320, the battery module assembly 100 may be coupled to the mounting portion 300 and the battery module assemblies 100 may be connected to each other, thereby easing the assembly. Additionally, the manipulation to insert the protrusion portion 400 into the protrusion insertion portion 320 may be simply mechanically performed, so there is no need for a special alignment process for coupling the battery module assembly 100 to the mounting portion 300, and the protrusion insertion portion 320 may act as a guide to insert the protrusion portion 400, thereby easing the assembly. After the protrusion portion 400 is inserted into the protrusion insertion portion 320, the confined assembly between the battery module assembly 100 and the mounting portion 300 may be kept in position, thereby ensuring stability.

Accordingly, in case of bending of the battery pack 10, when the battery module assemblies 100 start to separate from each other and the mounting portion 300 moves in the heightwise direction, the stopper portion H of the protrusion portion 400 may prevent movements in the lengthwise direction or the widthwise direction of the cell array 110, thereby keeping the battery module assemblies 100 coupled together.

For example, as shown in FIGS. 1 and 2, the protrusion portion 400 may have a T-shaped cross section perpendicular to the heightwise direction of the cell array 110. In this instance, the T-shaped horizontal part may become the stopper portion H to prevent movements in the lengthwise direction or the widthwise direction of the cell array 110. The protrusion insertion portion 320 may have a shape corresponding to the protrusion portion 400. The shape of the protrusion portion 400 will be described in detail below.

Generally, the battery pack is manufactured by installing a beam such as an aluminum extrusion plate in the pack case and fixing battery cells to the beam using bolts. However, since bolting is only performed on the top of the beam, the beam and the battery cells are only locally held together, resulting in inadequate bending stiffness. However, in the case of the conventional battery pack, it is impossible to add a pack reinforcement in the vertical direction while keeping the height of the battery pack minimal, so it is difficult to increase bending stiffness. However, according to this exemplary configuration, since the protrusion portion 400 is inserted and fit into the protrusion insertion portion 320, it may be possible to fix all the battery module assemblies 100 while keeping the height of the battery pack 10 minimal, thereby ensuring bending stiffness and safety and reliability of the battery pack 10.

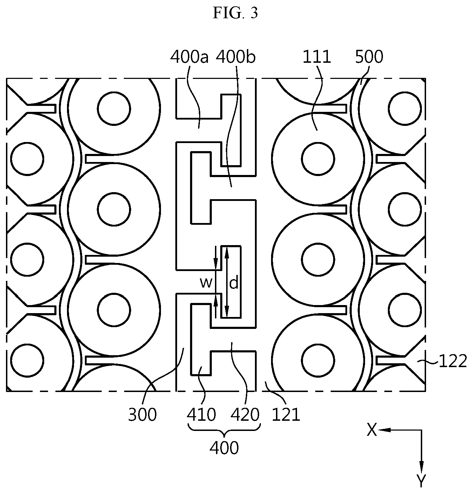

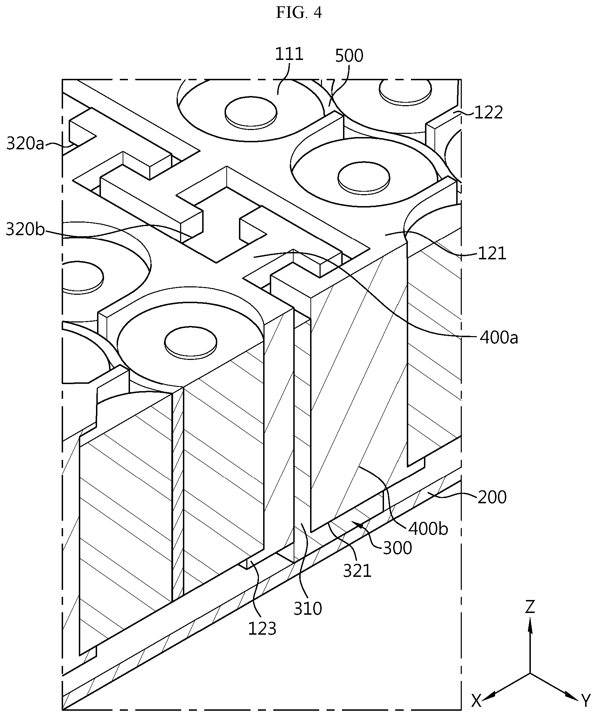

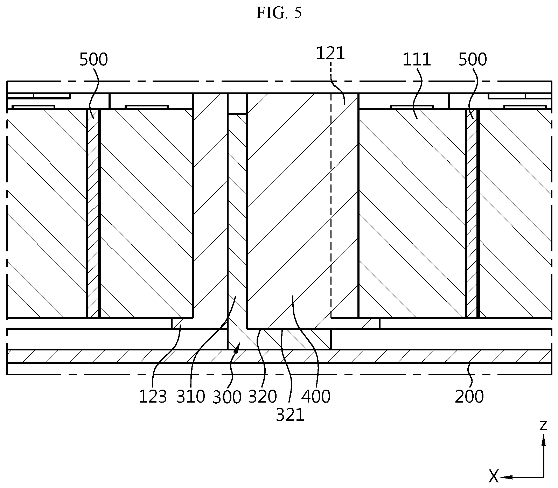

FIG. 3 is a diagram of the main components of the battery pack of FIG. 1 when viewed from top, FIG. 4 is a cross-sectional perspective view of the main components of the battery pack of FIG. 1, and FIG. 5 is a cross-sectional view of the battery pack of FIG. 1, taken along the line A-A'.

The structure of the protrusion portion 400 will be described in more detail with reference to FIGS. 3 to 5 together with FIGS. 1 and 2.

The protrusion portion 400 may include a first protrusion portion 400a present in any one of the plurality of battery module assemblies 100 and a second protrusion portion 400b present in the adjacent other battery module assembly 100 among the plurality of battery module assemblies 100, and the first protrusion portion 400a and the second protrusion portion 400b may be arranged in an alternating manner along the lengthwise direction. That is, since the protrusion portion 400 is present in each of two adjacent battery module assemblies 100, it may be possible to achieve tight coupling between the battery module assemblies 100 and prevent separation when the battery pack 10 is subjected to bending.

In this instance, the first protrusion portion 400a and the second protrusion portion 400b may be arranged in an alternating manner along the lengthwise direction, spaced apart from each other. Specifically, the first protrusion portion 400a and the second protrusion portion 400b may be spaced apart from each other along the widthwise direction or the lengthwise direction.

Each of the first protrusion portion 400a and the second protrusion portion 400b may include a leg portion 420 having a constant width (w) extending in the widthwise direction and a head portion 410 connected to the leg portion 420 and extending longer than the width (w) in the lengthwise direction. That is, the length (d) of the head portion is greater than the width (w) of the leg portion 420 to form the stopper portion H of the protrusion portion 400, and when the battery pack 10 is subjected to bending, the stopper portion H may be confined to the protrusion insertion portion 320, thereby preventing the protrusion portion 400 from slipping out of the protrusion insertion portion 320. For example, as shown in FIGS. 3 to 5, the head portion 410 may extend from two sides of the leg portion 420 and have a T shaped cross section in a direction perpendicular to the heightwise direction.

Alternatively, the end portion of the head portion 410 may be bent in the widthwise direction, and the cross section in the direction perpendicular to the heightwise direction may be in the shape of 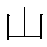 . Accordingly, as the number of stopper portions H increases, it may be possible to further prevent the separation of the battery module assemblies 100 when the battery pack 10 is subjected to bending.

In this instance, the head portion 410 of the first protrusion portion 400a and the head portion 410 of the second protrusion portion 400b may interfere with each other in the lengthwise direction or the widthwise direction when the mounting portion 300 is subjected to bending. That is, as shown in FIGS. 3 to 5, the first protrusion portion 400a and the second protrusion portion 400b according to an embodiment may be placed so that parts overlap in the widthwise direction, and the head portion 410 of the first protrusion portion 400a and the head portion 410 of the second protrusion portion 400b interfere with each other in the widthwise direction. When the battery pack 10 is subjected to vertical or horizontal bending, the first protrusion portion 400a and the second protrusion portion 400b may be subjected to rotating forces relative to each other by the bending force. When the first protrusion portion 400a and the second protrusion portion 400b interfere with each other, it may be possible to dissipate and absorb the rotating forces, thereby preventing breakage due to stress concentration on any one, and as a result, ensuring bending stiffness.

Meanwhile, the mounting portion 300 may include a first protrusion insertion portion 320a into which the first protrusion portion 400a is inserted on one side and a second protrusion insertion portion 320b into which the second protrusion portion 400b is inserted on the other side. The first protrusion insertion portion 320a and the second protrusion insertion portion 320b may be in a shape corresponding to the first protrusion portion 400a and the second protrusion portion 400b at the locations of the first protrusion portion 400a and the second protrusion portion 400b.

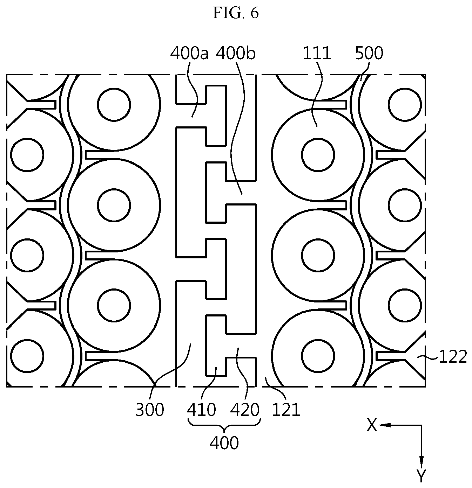

The first protrusion portion 400a and the second protrusion portion 400b may have various shapes to form the stopper portion H that may be confined to the protrusion insertion portion 320 when the battery pack 10 is subjected to bending. Hereinafter, embodiments of various shapes of the protrusion portion 400 and the protrusion insertion portion 320 will be described with reference to FIGS. 6 to 8 together with FIGS. 3 to 5.

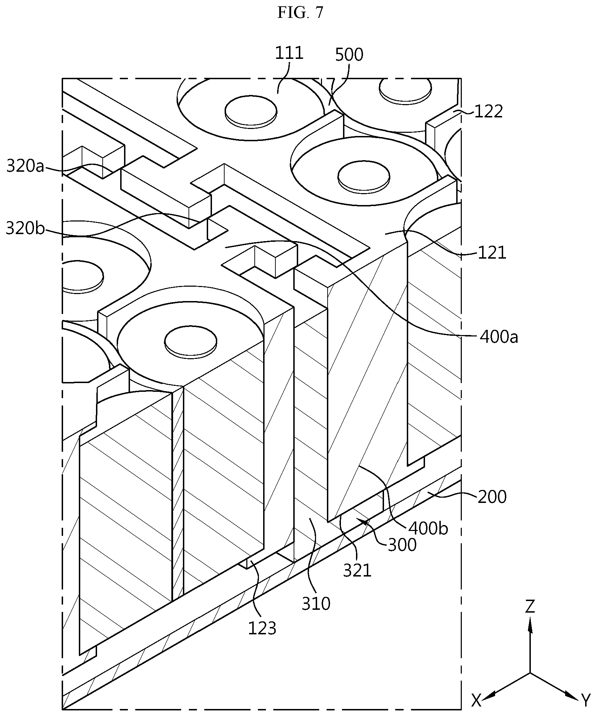

FIGS. 6 to 10 are diagrams illustrating other embodiments of the present disclosure. FIGS. 6, 8 and 10 are diagrams of the main components of the battery pack according to the above-described embodiments when viewed from top, respectively, and FIGS. 7, 9 and 11 are cross-sectional perspective views of the main components of FIGS. 6, 8 and 10, respectively.

Referring to FIGS. 6 and 7, as opposed to the protrusion portion 400 of FIGS. 3 to 5, the first protrusion portion 400a and the second protrusion portion 400b may be placed so that parts overlap in the lengthwise direction, and the head portion 410 of the first protrusion portion 400a and the head portion 410 of the second protrusion portion 400b interfere with each other in the lengthwise direction. In this instance, the first protrusion portion 400a and the second protrusion portion 400b are arranged in a straight line such that the protrusion portions 400 are in vertical and horizontal symmetry, which makes it easy to make the protrusion portion 400 and the protrusion insertion portion 320.

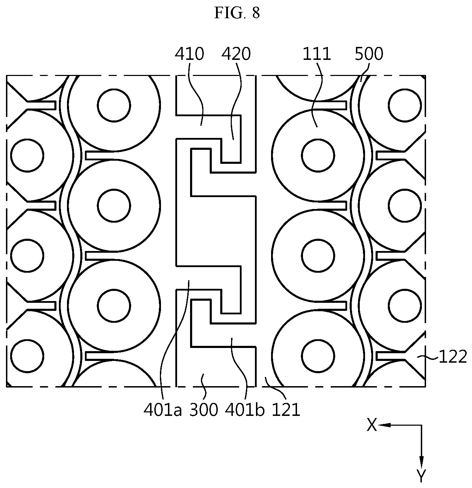

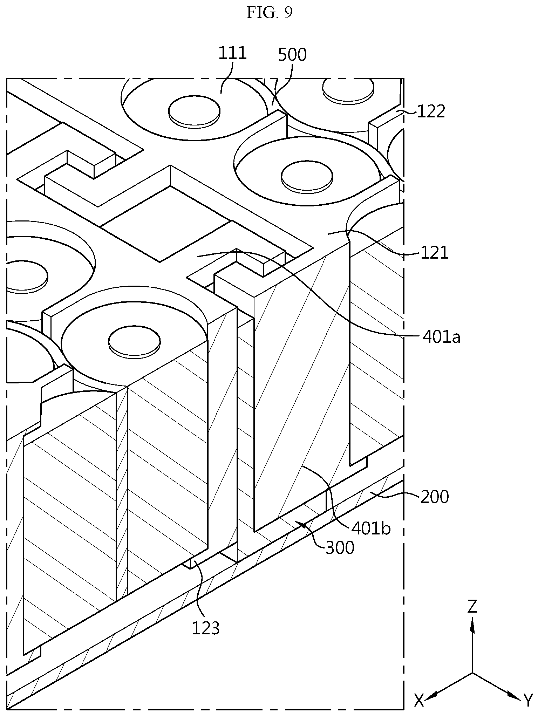

Referring to FIGS. 8 and 9, the first protrusion portion 401a and the second protrusion portion 401b may have a 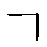 -shaped cross section in the direction perpendicular to the heightwise direction. That is, as opposed to the protrusion portion 400 of FIGS. 3 to 5 having the head portion 410 extending from two sides of the leg portion 420, the head portion 410 may extend from one side of the leg portion 420.

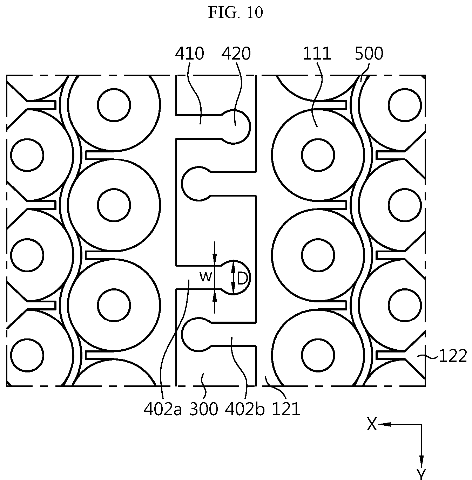

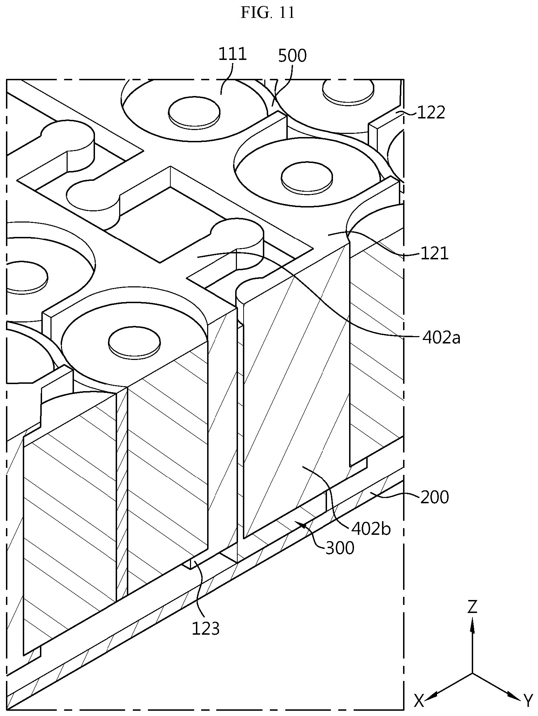

Additionally, referring to FIGS. 10 and 11, as opposed to the protrusion portion 400 of FIGS. 3 to 5 having the angled head portion 410, the first protrusion portion 402a and the second protrusion portion 402b may have the round tipped head portion 410. As described above, the protrusion portion 400 may have any shape that forms the stopper portion H so long as the diameter D of the head portion 410 is greater than the width (w) of the leg portion 420.

In the embodiment of FIGS. 8 to 11, the interval between the protrusion portions 400 may be smaller than the interval between the T-shaped protrusion portions 400, so the cell array case 120 may have a larger number of protrusion portions 400, thereby ensuring higher stiffness of the pack case.

Describing the structure in which the protrusion portion 400 is inserted into the protrusion insertion portion 320 with reference to FIGS. 3 to 5, the protrusion portion 400 may be inserted into the protrusion insertion portion 320 in the heightwise direction of the cell array 110.

The protrusion portion 400 and the protrusion insertion portion 320 may extend in the heightwise direction of the cell array 110 to correspond to the height of the cell array case 120. **In** this instance, as shown in FIG. 2, the protrusion insertion portion 320 may include a stopper part 321 spaced apart in the heightwise direction of the mounting portion 300 to support a bottom surface of the protrusion portion 400. Accordingly, since the protrusion portion 400 is inserted into the protrusion insertion portion 320 and seated on the stopper part 321, the protrusion portion 400 may protrude in the heightwise direction more than the protrusion insertion portion 320.

Since the protrusion portion 400 and the protrusion insertion portion 320 extend in the heightwise direction, loads may be transferred to the cell array case 120 and the mounting portion 300 when the battery pack 10 is subjected to bending. As a result, stiffness of the battery module assembly 100 may be used as stiffness of the battery pack 10. Accordingly, it may be possible to ensure stiffness of the battery pack 10 while keeping the height of the battery pack 10 minimal, i.e., without adding a pack reinforcement in the heightwise direction. In particular, it may be possible to ensure bending stiffness.

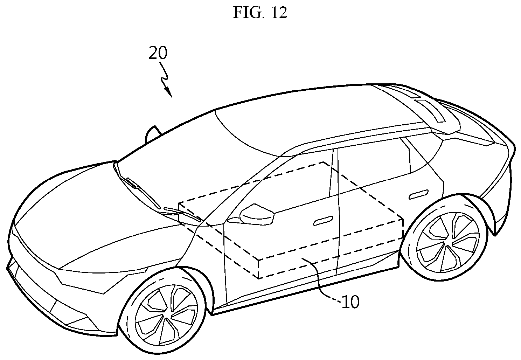

FIG. 12 is a perspective view of a vehicle including the battery pack of FIG. 1.

Meanwhile, the present disclosure may provide the vehicle 20 including the battery pack 10 according to the above-described embodiments. That is, the battery pack 10 according to the present disclosure may be applied to a vehicle such as an electric vehicle or a hybrid electric vehicle. For example, the battery pack 10 may be installed at a vehicle body frame below the seat or a trunk space.

According to the above-described various embodiments, it may be possible to provide the battery pack 10 having bending stiffness, thereby ensuring safety and reliability and the vehicle 20 including the same.

For reference, the battery pack 10 according to the present disclosure may be applied to not only vehicles but also Energy Storage Systems (ESS) or various types of electric devices. Since devices, apparatus and equipment including the battery pack 10 such as the vehicle 20 according to an embodiment of the present disclosure include the battery pack 10, they will have the advantages of the battery pack 10.

The terms indicating directions such as upper, lower, left, right, front and rear are used for convenience of description, but it is obvious to those skilled in the art that the terms may change depending on the position of the stated element or an observer.

While the present disclosure has been hereinabove described with regard to a limited number of embodiments and drawings, the present disclosure is not limited thereto and it is apparent that a variety of changes and modifications may be made by those skilled in the art within the technical aspect of the present disclosure and the scope of the appended claims and their equivalents.

## Claims

1. A battery pack, comprising:
a plurality of battery module assemblies, each battery module assembly including a cell array including a plurality of battery cells and a cell array case accommodating the cell array and having a protrusion portion extending from at least one surface; and
a mounting portion disposed between the plurality of battery module assemblies, and having a protrusion insertion portion into which the protrusion portion is inserted.

2. The battery pack according to claim 1, wherein the cell array has a length, a width and a height,
wherein the plurality of battery module assemblies is arranged along a widthwise direction of the cell array, and
wherein the mounting portion extends along a lengthwise direction of the cell array between the plurality of battery module assemblies.

3. The battery pack according to claim 2, wherein the protrusion portion protrudes from at least one surface of the cell array case toward the widthwise direction.

4. The battery pack according to claim 2, wherein the protrusion portion includes a stopper portion to prevent movement in the lengthwise direction or the widthwise direction within the protrusion insertion portion.

5. The battery pack according to claim 4, wherein the protrusion portion has a T-shaped cross section perpendicular to a heightwise direction of the cell array.

6. The battery pack according to claim 5, wherein the protrusion insertion portion is in a shape corresponding to the protrusion portion.

7. The battery pack according to claim 2, wherein the protrusion portion includes a plurality of protrusion portions spaced apart from each other along the lengthwise direction.

8. The battery pack according to claim 7, wherein the protrusion portion includes:
a first protrusion portion present in any one of the plurality of battery module assemblies; and
a second protrusion portion present in an adjacent other battery module assembly among the plurality of battery module assemblies, and
wherein the first protrusion portion and the second protrusion portion are arranged in an alternating manner along the lengthwise direction.

9. The battery pack according to claim 8, wherein the first protrusion portion and the second protrusion portion are arranged spaced apart from each other.

10. The battery pack according to claim 9, wherein the first protrusion portion and the second protrusion portion are arranged so that parts overlap in the widthwise direction.

11. The battery pack according to claim 10, wherein each of the first protrusion portion and the second protrusion portion includes:
a leg portion extending in the widthwise direction and having a constant width; and
a head portion connected to the leg portion and extending longer than the width in the lengthwise direction, and
wherein the head portion of the first protrusion portion and the head portion of the second protrusion portion interfere with each other in the lengthwise direction or the widthwise direction in case of bending of the mounting portion.

12. The battery pack according to claim 11, wherein the head portion extends from one side of the leg portion.

13. The battery pack according to claim 11, wherein the head portion extends from two sides of the leg portion.

14. The battery pack according to claim 11, wherein the head portion has a round tip.

15. The battery pack according to claim 8, wherein the mounting portion includes:
a first protrusion insertion portion into which the first protrusion portion is inserted on one side; and
a second protrusion insertion portion into which the second protrusion portion is inserted on the other side.

16. The battery pack according to claim 2, wherein the protrusion portion is inserted into the protrusion insertion portion in a heightwise direction of the cell array.

17. The battery pack according to claim 2, wherein the protrusion portion and the protrusion insertion portion extend in a heightwise direction of the cell array to correspond to a height of the cell array case.

18. The battery pack according to claim 17, wherein the protrusion insertion portion includes a stopper part spaced apart in the heightwise direction of the mounting portion to support a bottom surface of the protrusion portion.

19. The battery pack according to claim 1, wherein the mounting portion includes a solid or empty wall portion made by die casting, and
wherein the protrusion insertion portion is shaped such that at least a portion of an outer surface of the wall portion is recessed inwards.

20. A vehicle comprising the battery pack according to any one of claims 1 to 19.
